# EUROPÄISCHE PATENTSCHRIFT

(11) **EP 3 235 580 B1**
(45) Veröffentlichungstag und Bekanntmachung des Hinweises auf die Patenterteilung: **18.03.2020**
(21) Anmeldenummer: 17166731.4
(22) Anmeldetag: 18.04.2017
(51) Int. Cl.: B22F 3/105, B22F 5/00, B33Y 10/00, B33Y 30/00, B29C 64/20, B29C 64/153, B33Y 50/02

(54) **VERFAHREN UND VORRICHTUNG ZUM HERSTELLEN ZUMINDEST EINES BAUTEILBEREICHS EINES BAUTEILS**
METHOD AND DEVICE FOR ADDITIVE MANUFACTURE OF AT LEAST ONE COMPONENT AREA OF A COMPONENT
PROCÉDÉ ET DISPOSITIF DE FABRICATION D'AU MOINS UNE ZONE D'UN COMPOSANT

(30) Priorität: 19.04.2016 DE 102016206558
(43) Veröffentlichungstag der Anmeldung: 25.10.2017
(73) Patentinhaber: MTU Aero Engines AG, 80995 München (DE)
(72) Erfinder: Casper, Johannes, 85737 München (DE); Schlick, Georg, 86156 Augsburg (DE); Ladewig, Alexander, 83707 Bad Wiessee (DE)

(56) Entgegenhaltungen:
- EP-A1- 2 359 964
- DE-A1-102014 203 711
- DE-A1-102015 214 994
- US-A1- 2015 306 820

## Beschreibung

Die Erfindung betrifft ein Verfahren und eine Vorrichtung zur Herstellung zumindest eines Bauteilbereichs eines Bauteils, insbesondere eines Bauteils einer Strömungsmaschine.

Verfahren und Vorrichtungen zur Herstellung von Bauteilen sind in einer großen Vielzahl bekannt. Insbesondere sind generative oder additive Fertigungsverfahren (sog. Rapid Manufacturing- bzw. Rapid Prototyping-Verfahren) bekannt, bei denen das Bauteil durch pulverbettbasierte, additive Fertigungsverfahren schichtweise aufgebaut wird. Vorwiegend metallische Bauteile können beispielsweise durch Laser- bzw. Elektronenstrahlschmelz- oder - sinterverfahren hergestellt werden. Dabei wird zunächst schichtweise mindestens ein pulverförmiger Bauteilwerkstoff auf eine Bauteilplattform im Bereich einer Aufbau- und Fügezone der Vorrichtung aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Hochenergiestrahls, zum Beispiel eines Elektronen- oder Laserstrahls zugeführt wird. Der Hochenergiestrahl wird dabei in Abhängigkeit einer Schichtinformation der jeweils herzustellenden Bauteilschicht gesteuert. Nach dem Verschmelzen und/oder Versintern wird die Bauteilplattform schichtweise um eine vordefinierte Schichtdicke abgesenkt. Danach werden die genannten Schritte bis zur endgültigen Fertigstellung des Bauteils wiederholt.

Aus dem Stand der Technik sind insbesondere auch generative beziehungsweise additive Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine. Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO2-Laser, Nd:YAG-Laser, Yb-Faserlaser sowie Diodenlaser, und/oder durch Elektronenstrahlen. Bei dem in der DE 10 2009 051 479 A1 beschriebenen Verfahren wird weiterhin die Aufbau- und Fügezone auf eine Temperatur knapp unterhalb des Schmelzpunkts des Bauteilwerkstoffs mittels eines Zonenofens erwärmt, um eine gerichtet erstarrte oder einkristalline Kristallstruktur zu erzielen oder aufrechtzuerhalten.

Die DE 10 2012 206 122 A1 beschreibt eine Vorrichtung zur generativen Herstellung von Bauteilen mittels einem Laserpulverauftragsschweißen und/oder einem selektiven Bestrahlen eines Pulverbetts, wobei die Vorrichtung mindestens eine relativ zu einem oder mehreren Pulverbetträumen beweglich angeordnete Induktionsspule aufweist. Die Induktionsspulen sind dabei entlang separat ausgebildeter Schienenanordnungen linear verfahrbar. Durch die lokale, induktive Vorerwärmung der zu verschmelzenden Pulverschichten während des additiven beziehungsweise generativen Aufbau des Bauteils ist es möglich, dass Heißrissbildungen, insbesondere bei der Verarbeitung von Hochtemperaturlegierungen, bei der Herstellung des Bauteils zuverlässig verhindert werden. Eine induktive Heizung des herzustellenden Bauteils im Zusammenhang mit der generativen Herstellung eines Bauteils mit Hilfe von selektivem Laserschmelzen ist auch in der EP 2 359 964 A1 beschrieben. Auch aus der EP 2 572 815 B1 ist ein additives Herstellungsverfahren bekannt, bei dem wiederum eine Induktionsanregung zur Erwärmung des Bauteils während dessen Herstellung verwendet wird. Gemäß der EP 2 572 815 B sollen Aufschmelzungen oder Sinterereignisse im Pulverbett vermieden werden.

Die US 2015/306820 A1 beschreibt ein Verfahren zur Herstellung eines Teils durch Schmelzen eines Pulvers mittels eines Hochenergiestrahls. Durch den Hochenergiestrahl werden Partikel des Pulvers auf eine Temperatur erwärmt, welche oberhalb ihrer Schmelztemperatur liegt. Bei dem Verfahren wird ein Schmelzbad gebildet, welches die Partikel des geschmolzenen Pulvers enthält. Durch eine zusätzliche Heizvorrichtung, kann an das Schmelzbad angrenzendes Material auf eine Temperatur unterhalb der Schmelztemperatur erwärmt werden, um einer Rissbildung entgegenzuwirken.

Nachteilig an diesen bekannten Verfahren ist, dass sie zwar eine Verarbeitung von rissanfälligen metallischen Werkstoffen ermöglichen, jedoch eine gezielte Belichtung einer Kontur des herzustellenden Bauteils erschweren. Dies liegt insbesondere darin begründet, dass die Induktionsspulen während der Belichtung der Pulverschichten diese, insbesondere in den Konturbereichen, zumindest teilweise verdecken. Die Aufbau- und Fügezone des Pulverbetts ist dadurch für einen Energiestrahl, insbesondere einen Laserstrahl, teilweise nicht oder nur schwer zugänglich. Auch die aufgrund der Grenzen der Lineartechnik begrenzte Spulengeschwindigkeit führt zu einem erheblichen technischen Aufwand bei der Koordinierung der Bewegung von Induktionsspule und Laserstrahl während des additiven Aufbaus eines Bauteils.

Eine Aufgabe der vorliegenden Erfindung ist es, ein Verfahren zum Herstellen zumindest eines Bauteilbereichs eines Bauteils zu schaffen, mit welchem eine verbesserte Bauteilqualität, insbesondere eine verbesserte Oberflächenqualität, bei additiv hergestellten metallischen Bauteilbereichen oder metallischen Bauteilen mit geringem apparativen Mehraufwand erzielt wird. Eine weitere Aufgabe der Erfindung ist es, eine gattungsgemäße Vorrichtung bereitzustellen, welche eine verbesserte Bauteilqualität, insbesondere eine verbesserte Oberflächenqualität, bei additiv hergestellten metallischen Bauteilbereichen oder metallischen Bauteilen mit geringem apparativen Mehraufwand ermöglicht.

Die Aufgaben werden erfindungsgemäß durch ein Verfahren mit den Merkmalen des Patentanspruchs 1 sowie eine Vorrichtung mit den Merkmalen des Patentanspruchs 7 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Aspekt der Erfindung betrifft ein Verfahren zum Herstellen zumindest eines metallischen Bauteilbereichs eines Bauteils, insbesondere eines Bauteils einer Strömungsmaschine, umfassend zumindest die folgenden Schritte: a) Schichtweises Auftragen von mindestens einem metallischen Werkstoff auf mindestens eine Bauplattform; b) Schichtweises und lokales Verschmelzen und/oder Versintern des Werkstoffs durch Zuführen von Energie mittels wenigstens eines Hochenergiestrahls im Bereich einer Aufbau- und Fügezone zum Ausbilden zumindest eines Teilbereichs wenigstens einer Bauteilschicht des Bauteilbereichs und/oder des Bauteils; c) Schichtweises Absenken der Bauplattform um eine vordefinierte Schichtdicke; und d) Wiederholen der Schritte a) bis c) bis zur Fertigstellung des Bauteilbereichs und/oder des Bauteils. Erfindungsgemäß erfolgt vor, während und/oder nach dem schichtweisen und lokalen Verschmelzen und/oder Versintern gemäß dem Verfahrensschritt b) die Ausbildung zumindest eines weiteren Teilbereichs der Bauteilschicht durch ein lokales Verschmelzen und/oder Versintern des Werkstoffs mittels induktiver Erwärmung bei einer Temperatur oder in einem Temperaturbereich die/der überhalb der Solidustemperatur des verwendeten metallischen Werkstoffs liegt. Bei der genannten Temperatur beziehungsweise dem genannten Temperaturbereich, die/der insbesondere auch über dem Schmelzpunkt des metallischen Werkstoffs liegen kann, erfolgt erfindungsgemäß ein Anschmelzen und/oder Verschmelzen und/oder ein Versintern des metallischen Werkstoffs mittels induktiver Erwärmung. Durch die erfindungsgemäße Erwärmung wird die Qualität der Oberfläche des hergestellten Bauteilbereichs oder Bauteils deutlich verbessert. Insbesondere Risse oder rissartige Gefügestrukturen können während der Herstellung des Bauteilbereichs und/oder Bauteils vermieden werden. Vorteilhafterweise kann für die induktive Erwärmung eine bereits vorhandene Induktionsvorrichtung, die üblicherweise für eine Vorwärmung des pulverförmigen Werkstoffs vor dessen Verschmelzung und/oder Versinterung verwendet wird, auch für das genannte erfindungsgemäße Verschmelzen und/oder Versintern wenigstens eines Teilbereichs der Werkstoffschicht(en) zu entsprechenden Bauteilschicht(en) des additiv hergestellten Bauteilbereichs und/oder des Bauteils verwendet werden. Dadurch ergibt sich kein zusätzlicher apparativer Aufwand bei der Durchführung des erfindungsgemäßen Verfahrens. Insbesondere können Bereiche einer Pulverschicht des metallischen Werkstoffs beziehungsweise eines Pulverbetts des metallischen Werkstoffs, die üblicherweise zumindest zeitweise einer Belichtung mittels eines Energiestrahls nicht oder nur schwer zugänglich sind, sicher mittels der induktiven Wärmebehandlung beziehungsweise Erwärmung lokal verschmolzen und/oder versintert werden. Die Temperatur, bei der die genannte Vorwärmung erfolgt, liegt unterhalb der Solidustemperatur des verwendeten Werkstoffs, wobei die Vorerwärmung der pulverförmigen Werkstoffschicht und deren Verschmelzung und/oder Versinterung im Wesentlichen voneinander unabhängige Prozessschritte darstellen. Eine Kombination dieser Prozessschritte ist jedoch auch denkbar.

Des Weiteren besteht die Möglichkeit, dass die Ausbildung des weiteren Teilbereichs der Bauteilschicht durch das lokales Verschmelzen und/oder Versintern des Werkstoffs mittels induktiver Erwärmung in jeder oder nicht in jeder Werkstoffschicht erfolgt. Dabei kann die Eindringtiefe der Erwärmung über eine Regelung der Frequenz erfolgen. Durch eine entsprechende Anpassung an die vorgegebene Bauteilgeometrie kann ein optimierter Verfahrensablauf bezüglich des Aufbaus der einzelnen Bauteilschichten des Bauteils bezüglich des Verschmelzens und/oder Versinterns mittels des Hochenergiestrahls und der induktiven Erwärmung erzielt werden.

Das erfindungsgemäße Verfahren kann insbesondere für jeden metallischen Werkstoff genutzt werden. Beispielsweise kann der metallische Werkstoff aus einer Nickelbasislegierung, einer Nickelsuperlegierung, einem mittel- oder hochlegierten Stahl, einer Kobaltbasislegierung, einer Eisenbasislegierung, einer ausscheidungsgehärteten Legierung auf Aluminiumbasis, einer Kupfer-, Molybdän- oder Platinlegierung oder einer Mischung davon, bestehen. Auch andere metallische Werkstoffe sind denkbar. Des Weiteren besteht die Möglichkeit, dass dem metallischen Werkstoff ein keramischer Werkstoff oder Kohlefasern beigemengt sind.

In vorteilhaften Ausgestaltungen des erfindungsgemäßen Verfahrens kann das additive Herstellungsverfahren ein selektives Laserschmelz- oder Lasersinterverfahren oder ein Elektronenstrahlschmelz- oder Elektronenstrahlsinterverfahren oder eine Kombination dieser Verfahren sein. Auch andere additive Herstellungsverfahren sind denkbar.

In vorteilhaften Ausgestaltungen des erfindungsgemäßen Verfahrens erfolgt mittels der induktiven Erwärmung ein Verschmelzen und/oder Versintern eines Konturbereichs wenigstens innerhalb der mindestens einen Werkstoffschicht. Über die Regelung der Frequenz der induktiven Erwärmung kann beispielsweise die Eindringtiefe der Erwärmung in die Werkstoff- und/oder Bauteilschicht vor, während oder nach der additiven Herstellung mittels des Hochenergiestrahls variiert werden. So kann beispielsweise durch eine höhere Leistung der Induktion im Konturbereich beziehungsweise Kantenbereich des Bauteils die Endbearbeitung dieses Konturbereichs ohne Einsatz des Lasers erfolgen. Insbesondere wird hierdurch eine Verringerung der Rauigkeit der Oberfläche erzielt. Des Weiteren besteht die Möglichkeit, dass während des additiven Herstellens des Bauteilbereichs und/oder des Bauteils gemäß Verfahrensschritt b) eine zumindest teilweise Erwärmung des Werkstoffs vor dessen schichtweisen und lokalen Verschmelzen und/oder Versintern mittels mindestens eines Hochenergiestrahls über eine induktive Erwärmung des Werkstoffs auf eine Temperatur unterhalb der Solidustemperatur des Werkstoffs erfolgt. Durch diese Vorerwärmung unterhalb der Solidustemperatur des verwendeten Werkstoffs können Rissbildungen während der additiven Herstellung des Bauteilsbereichs und/oder des Bauteils minimiert werden.

Des Weiteren besteht die Möglichkeit, dass der weitere, mittels der induktiven Erwärmung hergestellte Teilbereich der mindestens einen Bauteilschicht ein Konturbereich des Bauteilbereichs und/oder des Bauteils ist. Je nach Anforderungsprofil an das herzustellende Bauteil besteht somit vorteilhafterweise eine Vielzahl an Ausgestaltungsmöglichkeiten der erfindungsgemäßen Vorrichtung. Des Weiteren können unterschiedliche induktive Erwärmungsvorgänge mit nur einer Induktionsvorrichtung durchgeführt werden. Dies minimiert den apparativen Aufwand deutlich. Es besteht aber auch grundsätzlich die Möglichkeit, dass mehrere Induktionsvorrichtungen zum Einsatz kommen. So kann mindestens eine weitere, verfahrbar oder nicht-verfahrbar angeordnete Induktionsspule derart ausgebildet sein, dass sie mittels der induktiven Erwärmung ein Verschmelzen und/oder Versintern des Konturbereichs des Bauteilbereichs und/oder des Bauteils innerhalb der Pulverschicht bewirkt. Hierfür kann beispielsweise der Frequenzbereich der Induktionsspule so eingestellt werden, dass sich die Erwärmung bevorzugt auf den Konturbereich beschränkt. Insbesondere lässt sich hiermit die Rauigkeit des Bauteils im Konturbereich deutlich verringern, da auf eine mehrfache Laserbearbeitung dieser kritischen Randbereiche oder eine Belichtung mit hoher Laserleistung und einem damit einhergehenden unregelmäßigen Aufschmelzprozess, verzichtet werden kann.

Die genannten unterschiedlichen Möglichkeiten der induktiven Wärmebehandlung beziehungsweise Erwärmung können mittels einer oder mehrerer Induktionsvorrichtungen ausgeführt werden. Diese sind üblicherweise Steuer- und regelbar ausgebildet.

Ein zweiter Aspekt der Erfindung betrifft eine Vorrichtung zur Herstellung zumindest eines Bauteilbereichs eines Bauteils, insbesondere eines Bauteils einer Strömungsmaschine, umfassend mindestens eine Pulverzuführung zum Auftrag mindestens einer metallischen Pulverschicht auf eine Aufbau- und Fügezone einer Bauplattform und mindestens eine Strahlungsquelle zum Erzeugen wenigstens eines Hochenergiestrahls, mittels welchem die mindestens eine Pulverschicht im Bereich der Aufbau- und Fügezone lokal zur Ausbildung zumindest eines Teilbereichs einer Bauteilschicht verschmelzbar und/oder versinterbar ist. Zudem weist die Vorrichtung mindestens eine Induktionsvorrichtung auf, und eine Steuer- und Regeleinrichtung, die konfiguriert ist zum Steuern und Regeln der Induktionsvorrichtung zur Ausbildung wenigstens eines weiteren Teilbereichs der Bauteilschicht durch ein schichtweises und lokales Verschmelzen und/oder Versintern des Werkstoffs der Pulverschicht mittels induktiver Erwärmung bei einer Temperatur oder in einem Temperaturbereich die/der überhalb der Solidustemperatur des verwendeten metallischen Werkstoffs liegt. Die erfindungsgemäße Vorrichtung ermöglicht vorteilhafterweise die Verwendung einer bereits vorhandenen Induktionsvorrichtung, die üblicherweise für eine Vorwärmung des pulverförmigen Werkstoffs vor dessen Verschmelzung und/oder Versinterung verwendet wird, auch für das genannte erfindungsgemäße Ausbilden des weiteren Teilbereichs der Bauteilschicht des additiv hergestellten Bauteilbereichs und/oder des Bauteils.. Dadurch ergibt sich kein zusätzlicher apparativer Aufwand. Zudem können Bereiche einer Pulverschicht des metallischen Werkstoffs beziehungsweise eines Pulverbetts des metallischen Werkstoffs, die üblicherweise zumindest zeitweise einer Belichtung mittels eines Energiestrahls nicht oder nur schwer zugänglich sind, sicher mittels der induktiven Wärmebehandlung lokal verschmolzen und/oder versintert werden.

Die Temperatur, bei der die genannte Vorwärmung erfolgt, liegt unterhalb der Solidustemperatur des verwendeten metallischen Werkstoffs, wobei die Vorerwärmung der pulverförmigen Werkstoffschicht und deren Verschmelzung und/oder Versinterung im Wesentlichen voneinander unabhängige Prozessschritte darstellen. Eine Kombination dieser Prozessschritte ist jedoch auch denkbar. Der Hochenergiestrahl kann ein Laser- oder Elektronenstrahl sein.

In weiteren vorteilhaften Ausgestaltungen der erfindungsgemäßen Vorrichtung ist diese als selektive Laserschmelzvorrichtung und/oder als Elektronenstrahlschmelzvorrichtung ausgebildet.

In weiteren vorteilhaften Ausgestaltungen der erfindungsgemäßen Vorrichtung umfasst die Induktionsvorrichtung mindestens eine Induktionsspule. Des Weiteren besteht die Möglichkeit, dass mindestens zwei Induktionsspulen einen Kreuzungsbereich ausbilden (Kreuzspulenkonzept). In dem genannten Kreuzungsbereich werden aufgrund der Überlagerung der elektromagnetischen Felder die höchsten Temperaturen erreicht. Zudem kann die Induktionsvorrichtung regelbar ausgebildet sein, derart, dass unterschiedliche, durch induktive Erwärmung erzielbare Temperaturen oder Temperaturbereiche vor, während und/oder nach der additiven Herstellung des Bauteilbereichs und/oder des Bauteils einstellbar und regelbar, insbesondere über die Regelung des Frequenzbereichs, sind. Dabei kann zum Beispiel mindestens eine Temperatur oder ein Temperaturbereich während der additiven Herstellung des Bauteilsbereichs und/oder des Bauteils unterhalb der Solidustemperatur des Werkstoffs liegen.

Die Induktionsvorrichtung weist üblicherweise eine Steuer- und/oder Regeleinrichtung auf, die dazu ausgebildet ist, die Stärke der induktiven Erwärmung und/oder die Position der Induktionsvorrichtung zu regeln und/oder zu steuern. Des Weiteren besteht die Möglichkeit, dass die Vorrichtung eine Temperaturerfassungseinrichtung umfasst, wobei die Steuer- und/oder Regeleinrichtung die Position und/oder die Leistung der Induktionsvorrichtung in Abhängigkeit der Messergebnisse der Temperaturerfassungseinrichtung regelt. Auch eine Regelung oder Steuerung der Leistung der Induktionsvorrichtung in Abhängigkeit der Position der Induktionsvorrichtung ist denkbar.

Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Weitere Merkmale und deren Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

Weitere Merkmale der Erfindung ergeben sich aus den Ansprüchen und dem Ausführungsbeispiel. Die vorstehend in der Beschreibung genannten Merkmale und Merkmalskombinationen, sowie die nachfolgend in dem Ausführungsbeispiel genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in dem Ausführungsbeispiel nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
Fig. 1 eine schematische Darstellung einer erfindungsgemäßen Vorrichtung; und
Fig. 2 ein Flussdiagramm zur Veranschaulichung eines Ausführungsbeispiels des erfindungsgemäßen Verfahrens.

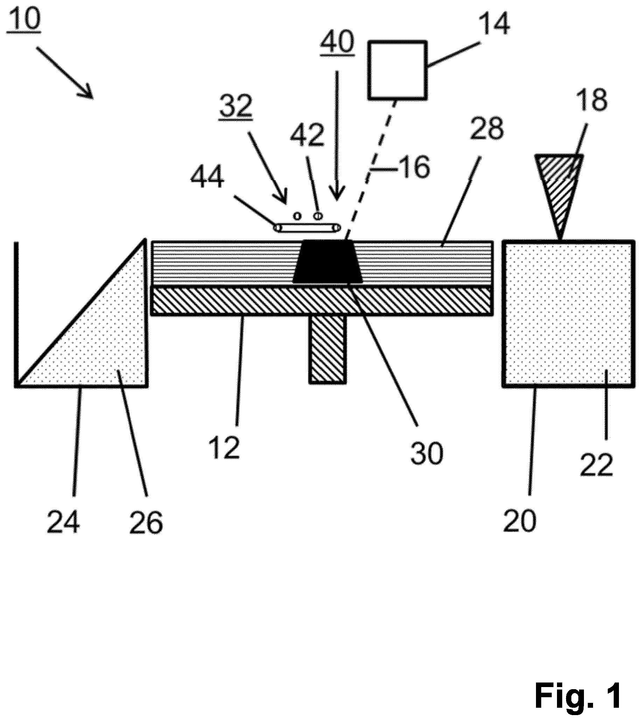

Fig. 1 zeigt eine schematische Darstellung einer Vorrichtung 10 zur Herstellung eines metallischen Bauteils 30, insbesondere eines Bauteils einer Strömungsmaschine. Die Vorrichtung 10 umfasst dabei eine Pulverzuführung 18 zum Auftrag eines metallischen Werkstoffs 22 als Pulverschicht 28 auf eine Aufbau- und Fügezone 40 einer Bauplattform 12. Der metallische Werkstoff 22 ist dabei in einem Vorratsbehälter 20 gelagert und wird über die Pulverzuführung 18, welche insbesondere als so genannter Beschichter ausgebildet ist, schichtweise auf die Bauplattform 12 aufgetragen. Die Pulverschichten 28 werden im Bereich der Aufbau- und Fügezone 40 zur Ausbildung zumindest eines Teilbereichs einer Bauteilschicht mittels eines von einer Laserquelle 14 abgegebenen Laserstrahls 16 schichtweise und lokal verschmolzen und/oder versintert. Durch die Steuerung des Laserstrahls 16 ergibt sich eine vorgeschriebene Bauteilgeometrie des Bauteils 30. Der nicht zum Aufbau des Bauteils 30 benötigte Werkstoff wird mittels des Beschichters 18 in einen Überlaufbehälter 24 überführt. Der nicht benötigte Bauteilwerkstoff ist mit 26 gekennzeichnet. Des Weiteren umfasst die Vorrichtung 10 eine Induktionsvorrichtung 32, die zwei Induktionsspulen 42, 44 aufweist. Die beiden Induktionsspulen 42, 44 bilden einen Kreuzungsbereich aus und sind nach dem so genannten Kreuzspulenkonzept aufgebaut. Die Induktionsvorrichtung 32 ist dabei über der Pulverschicht 28 beziehungsweise der Bauplattform 12 verfahrbar ausgebildet. Des Weiteren ist die Induktionsvorrichtung 32 dazu ausgelegt, eine Wärmebehandlung beziehungsweise Erwärmung zumindest einen weiteren Teilbereichs der Bauteilschicht durch ein lokales Verschmelzen und/oder Versintern des Werkstoffs 22 der Pulverschicht 28 mittels induktiver Erwärmung bei einer Temperatur oder in einem Temperaturbereich die/der überhalb der Solidustemperatur des verwendeten metallischen Werkstoffs 22 liegt, auszubilden. Bei der Verwendung von hochwarmfesten Nickelbasislegierungen als Werkstoff 22, wie beispielsweise M247, liegt der genannte Temperaturbereich oberhalb von ca. 1250 bis 1260 °C. Die Induktionsvorrichtung 32 wird dabei mittels einer Steuer- und Regeleinrichtung (nicht dargestellt) gesteuert und geregelt. Dies betrifft einerseits die Leistung der Induktionsvorrichtung 32 beziehungsweise der einzelnen Induktionsspulen 42, 44 wie auch deren Position überhalb der Bauplattform 12.

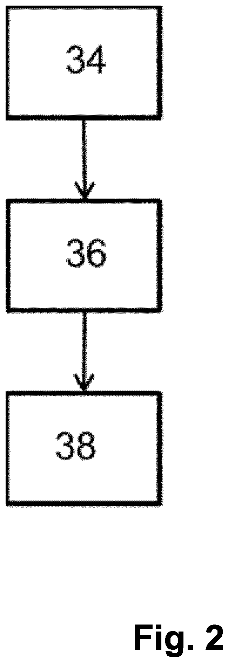

Fig. 2 zeigt ein Flussdiagramm zur Veranschaulichung eines Ausführungsbeispiels des erfindungsgemäßen Verfahrens. In einem ersten Verfahrungsschritt 34 erfolgt ein schichtweiser Auftrag des pulverförmigen Werkstoffs 22 auf die Bauplattform 12. In einem zweiten Verfahrensschritt 36 erfolgt eine zumindest teilweise Erwärmung des Werkstoffs 22 in der Pulverschicht 28 mittels induktiver Erwärmung und zwar vor dessen schichtweisen und lokalen Schmelzen und/oder Versintern mittels des Laserstrahls 16. Die Temperatur dieser Vorerwärmung liegt unterhalb der Solidustemperatur des Werkstoffs 22. In dem sich anschließenden oder auch parallel ausgeführten dritten Verfahrensschritt 38 wird die Pulverschicht 28 im Bereich der Aufbau- und Fügezone lokal zur Ausbildung zumindest eines Teilbereichs der Bauteilschicht mittels des Laserstrahls 16 verschmolzen und/oder versintert. Die vorgenannten Verfahrensschritte 34 bis 38 werden dabei solange wiederholt bis das Bauteil 30 fertiggestellt ist. Vor, während und/oder nach dem schichtweisen und lokalen Verschmelzen und/oder Versintern gemäß dem Verfahrensschritt 36 erfolgt die Ausbildung zumindest eines weiteren Teilbereichs der Bauteilschicht durch ein lokales Verschmelzen und/oder Versintern des Werkstoffs 22 mittels induktiver Erwärmung bei einer Temperatur oder in einem Temperaturbereich die/der überhalb der Solidustemperatur des verwendeten metallischen Werkstoffs 22 liegt. Die im Verfahrensschritt 36 zur induktiven Vorerwärmung der Pulverschicht 28 verwendete Induktionsvorrichtung 32 wird in dem gezeigten Ausführungsbeispiel auch für die die Ausbildung des weiteren Teilbereichs der Bauteilschicht verwendet.

### Bezugszeichenliste

- 10: Vorrichtung
- 12: Bauplattform
- 14: Laserquelle
- 16: Laserstrahl
- 18: Pulverzuführung
- 20: Vorratsbehälter
- 22: Werkstoff
- 24: Überlaufbehälter
- 26: Werkstoff
- 28: Pulverschichten
- 30: Bauteil
- 32: Induktionsvorrichtung
- 34: Verfahrensschritt
- 36: Verfahrensschritt
- 38: Verfahrensschritt
- 40: Aufbau- und Fügezone
- 42: Induktionsspule
- 44: Induktionsspule

## Patentansprüche

1. Verfahren zum Herstellen zumindest eines Bauteilbereichs eines Bauteils (30), insbesondere eines Bauteils einer Strömungsmaschine, umfassend zumindest folgende Schritte:
a) Schichtweises Auftragen von mindestens einem metallischen Werkstoff (22) auf mindestens eine Bauplattform (12);
b) Schichtweises und lokales Verschmelzen und/oder Versintern des Werkstoffs (22) durch Zuführen von Energie mittels wenigstens eines Hochenergiestrahls (16) im Bereich einer Aufbau- und Fügezone zum Ausbilden zumindest eines Teilbereichs wenigstens einer Bauteilschicht des Bauteilbereichs und/oder des Bauteils (30);
c) Schichtweises Absenken der Bauplattform (12) um eine vordefinierte Schichtdicke; und
d) Wiederholen der Schritte a) bis c) bis zur Fertigstellung des Bauteilbereichs und/oder des Bauteils (30),
**dadurch gekennzeichnet, dass**
vor, während und/oder nach dem schichtweisen und lokalen Verschmelzen und/oder Versintern gemäß dem Verfahrensschritt b) die Ausbildung zumindest eines weiteren Teilbereichs der Bauteilschicht durch ein lokales Verschmelzen und/oder Versintern des Werkstoffs (22) mittels induktiver Erwärmung bei einer Temperatur oder in einem Temperaturbereich die/der überhalb der Solidustemperatur des verwendeten metallischen Werkstoffs (22) liegt, erfolgt.

2. Verfahren nach Anspruch 1,
**dadurch gekennzeichnet, dass**
mittels der induktiven Erwärmung ein Verschmelzen und/oder Versintern eines Konturbereichs des Bauteilbereichs und/oder des Bauteils (30) wenigstens innerhalb der mindestens einen Werkstoffschicht erfolgt.

3. Verfahren nach einem der vorhergehenden Ansprüche,
**dadurch gekennzeichnet, dass**
während des additiven Herstellen der mindestens einen Bauteilschicht des Bauteilbereichs und/oder des Bauteils (30) gemäß Verfahrensschritt b) eine zumindest teilweise Erwärmung des Werkstoffs (22) vor dessen schichtweisen und lokalen Schmelzen und/oder Versintern mittels mindestens eines Hochenergiestrahls (16) mittels induktiver Erwärmung des Werkstoffs (22) auf eine Temperatur unterhalb der Solidustemperatur des Werkstoffs (22) erfolgt.

4. Verfahren nach einem der vorhergehenden Ansprüche,
**dadurch gekennzeichnet, dass**
das additive Herstellungsverfahren ein selektives Laserschmelz- oder Lasersinterverfahren oder ein Elektronenstrahlschmelz- oder Elektronenstrahlsinterverfahren oder eine Kombination dieser Verfahren ist.

5. Verfahren nach einem der vorhergehenden Ansprüche,
**dadurch gekennzeichnet, dass**
die Ausbildung des weiteren Teilbereichs der Bauteilschicht durch das lokales Verschmelzen und/oder Versintern des Werkstoffs (22) mittels induktiver Erwärmung in jeder oder nicht in jeder Werkstoffschicht erfolgt.

6. Verfahren nach Anspruch 2 oder einem der Ansprüche 3 bis 5 in dessen Rückbezug auf Anspruch 2,
**dadurch gekennzeichnet, dass**
der weitere, mittels der induktiven Erwärmung hergestellte Teilbereich der mindestens einen Bauteilschicht der Konturbereich des Bauteilbereichs und/oder des Bauteils (30) ist.

7. Vorrichtung (10) zur additiven Herstellung zumindest eines Bauteilbereichs eines Bauteils (30), insbesondere eines Bauteils einer Strömungsmaschine, umfassend:
- mindestens eine Pulverzuführung (18) zum Auftrag von mindestens einer Pulverschicht (28) eines metallischen Werkstoffs (22) auf eine Aufbau- und Fügezone einer Bauplattform (12);
- mindestens eine Strahlungsquelle (14) zum Erzeugen wenigstens eines Hochenergiestrahls (16), mittels welchem die mindestens eine Pulverschicht (28) im Bereich der Aufbau- und Fügezone lokal zur Ausbildung zumindest eines Teilbereichs einer Bauteilschicht verschmelzbar und/oder versinterbar ist;
- mindestens eine Induktionsvorrichtung (32); und
- eine Steuer- und Regeleinrichtung, konfiguriert zum Steuern und Regeln der Induktionsvorrichtung (32) zur Ausbildung wenigstens eines weiteren Teilbereichs der Bauteilschicht durch ein lokales Verschmelzen und/oder Versintern des Werkstoffs (22) der Pulverschicht (28) mittels induktiver Erwärmung bei einer Temperatur oder in einem Temperaturbereich die/der überhalb der Solidustemperatur des verwendeten metallischen Werkstoffs (22) liegt.

8. Vorrichtung nach Anspruch 7,
**dadurch gekennzeichnet, dass**
die Induktionsvorrichtung (32) mindestens eine Induktionsspule (42, 44) umfasst.

9. Vorrichtung nach Anspruch 8,
**dadurch gekennzeichnet, dass**
mindestens zwei Induktionsspulen (42, 44) einen Kreuzungsbereich ausbilden.

10. Vorrichtung nach Anspruch 8 oder 9,
**dadurch gekennzeichnet, dass**
mindestens eine weitere, verfahrbar oder nicht-verfahrbar angeordnete Induktionsspule derart ausgebildet ist, dass sie mittels der induktiven Erwärmung ein Verschmelzen und/oder Versintern eines Konturbereichs des Bauteilbereichs und/oder des Bauteils (30) innerhalb der Pulverschicht (28) bewirkt.

11. Vorrichtung nach einem der Ansprüche 7 bis 10,
**dadurch gekennzeichnet, dass**
die Induktionsvorrichtung (32) regelbar ausgebildet ist, derart, dass unterschiedliche, durch induktive Erwärmung erzielbare Temperaturen oder Temperaturbereiche vor, während und/oder nach der additiven Herstellung des Bauteilbereichs und/oder des Bauteils (30), einstellbar und regelbar sind.

12. Vorrichtung nach einem der Ansprüche 7 bis 11,
**dadurch gekennzeichnet, dass**
die Vorrichtung (10) mindestens eine selektive Laserschmelzvorrichtung und/oder mindestens eine Elektronenstrahlschmelzvorrichtung umfasst.

## Claims

1. Method for manufacturing at least one component region of a component (30), in particular a component of a turbomachine, comprising at least the following steps:
a) layered application of at least one metal material (22) onto at least one construction platform (12);
b) layered and local fusion and/or sintering of the material (22) by supplying energy by means of at least one high-energy beam (16) in the region of a build-up and joining zone in order to form at least one subregion of at least one component layer of the component region and/or the component (30);
c) layered reduction of the construction platform (12) by a predefined layer thickness; and
d) repetition of steps a) to c) until completion of the component region and/or the component (30),
**characterized in that**,
before, during and/or after the layered and local fusion and/or sintering according to method step b), at least one further subregion of the component layer is formed by local fusion and/or sintering of the material (22) by means of inductive heating at a temperature or in a temperature range that is above the solidus temperature of the metal material (22) used.

2. Method according to claim 1, **characterized in that**, by means of the inductive heating, a contour region of the component region and/or the component (30) is fused and/or sintered at least within the at least one material layer.

3. Method according to either of the preceding claims, **characterized in that** during the additive manufacturing of the at least one component layer of the component region and/or the component (30) according to method step b), the material (22) is at least partly heated before the layered and local fusion and/or sintering by means of at least one high-energy beam (16) by means of inductive heating of the material (22) to a temperature below the solidus temperature of the material (22).

4. Method according to any of the preceding claims, **characterized in that** the additive manufacturing method is a selective laser melting or laser sintering method or an electron beam melting or electron beam sintering method or a combination of said methods.

5. Method according to any of the preceding claims, **characterized in that** the further subregion of the component layer is formed by local fusion and/or sintering of the material (22) by means of inductive heating in each or not in each material layer.

6. Method according to claim 2 or any of claims 3 to 5 in their back-reference to claim 2, **characterized in that** the further subregion of the at least one component layer that is produced by means of inductive heating is the contour region of the component region and/or the component (30).

7. Device (10) for the additive manufacturing of at least one component region of a component (30), in particular of a component of a turbomachine, comprising:
- at least one powder supply (18) for applying at least one powder layer (28) of a metal material (22) to a build-up and joining zone of a construction platform (12);
- at least one radiation source (14) for generating at least one high-energy beam (16), by means of which the at least one powder layer (28) in the region of the build-up and joining zone can be locally fused and/or sintered to form at least one subregion of a component layer;
- at least one induction device (32); and
- an open- and closed-loop control device configured to control the induction device (32) in an open and closed loop to form at least one further subregion of the component layer by locally melting and/or sintering the material (22) of the powder layer (28) by means of inductive heating at a temperature or in a temperature range that is above the solidus temperature of the metal material (22) used.

8. Device according to claim 7, **characterized in that** the induction device (32) comprises at least one induction coil (42, 44).

9. Device according to claim 8, **characterized in that** at least two induction coils (42, 44) form an intersection region.

10. Device according to either claim 8 or claim 9, **characterized in that** at least one further movably or non-movably arranged induction coil is designed such that, by means of the inductive heating, it brings about melting and/or sintering of a contour region of the component region and/or the component (30) inside the powder layer (28).

11. Device according to any of claims 7 to 10, **characterized in that** the induction device (32) is designed to be controllable in a closed loop, such that different temperatures or temperature ranges that can be achieved by inductive heating can be adjusted and controlled in a closed loop before, during and/or after the additive manufacturing of the component region and/or the component (30).

12. Device according to any of claims 7 to 11, **characterized in that** the device (10) comprises at least one selective laser melting device and/or at least one electron beam melting device.

## Revendications

1. Procédé de fabrication d'au moins une région d'un composant (30), en particulier d'un composant d'une turbomachine, comprenant au moins les étapes suivantes :
a) l'application en couches d'au moins un matériau métallique (22) sur au moins une plate-forme de construction (12) ;
b) la fusion et/ou le frittage en couches et local du matériau (22) par apport d'énergie au moyen d'au moins un faisceau à haute énergie (16) dans la région d'une zone de construction et de jonction pour former au moins une région partielle d'au moins une couche de composant de la région de composant et/ou du composant (30) ;
c) l'abaissement en couches de la plate-forme de construction (12) d'une épaisseur de couche prédéfinie ; et
d) la répétition des étapes a) à c) jusqu'à l'achèvement de la région de composant et/ou du composant (30),
**caractérisé**
**en ce qu'**avant, pendant et/ou après la fusion et/ou le frittage en couches et local selon l'étape b), la formation d'au moins une autre région partielle de la couche de composant est effectuée par fusion et/ou frittage local du matériau (22) au moyen d'un chauffage inductif à une température ou dans une plage de température qui est supérieure à la température de solidus du matériau métallique (22) utilisé.

2. Procédé selon la revendication 1,
**caractérisé**
**en ce que**, au moyen d'un chauffage inductif, une fusion et/ou un frittage d'une région de contour de la région de composant et/ou du composant (30) est effectué au moins à l'intérieur de l'au moins une couche de matériau.

3. Procédé selon l'une quelconque des revendications précédentes,
**caractérisé**
**en ce que**, lors de la fabrication additive de l'au moins une couche de composant de la région de composant et/ou du composant (30) selon l'étape b), un chauffage au moins partiel du matériau (22) est effectué avant sa fusion et/ou son frittage en couches et local au moyen d'au moins un faisceau à haute énergie (16) au moyen d'un chauffage inductif du matériau (22) à une température inférieure à la température de solidus du matériau (22).

4. Procédé selon l'une quelconque des revendications précédentes,
**caractérisé**
**en ce que** le procédé de fabrication additive est un procédé de fusion sélective par laser ou de frittage sélectif par laser ou un procédé de fusion par faisceau d'électrons ou de frittage par faisceau d'électrons ou une combinaison de ces procédés.

5. Procédé selon l'une quelconque des revendications précédentes,
**caractérisé**
**en ce que** la formation de l'autre région partielle de la couche de composant est effectuée par la fusion et/ou le frittage local du matériau (22) au moyen d'un chauffage inductif dans chaque couche de matériau ou non.

6. Procédé selon la revendication 2 ou l'une quelconque des revendications 3 à 5 dans son renvoi à la revendication 2,
**caractérisé**
**en ce que** l'autre région partielle de l'au moins une couche de composant fabriquée au moyen d'un chauffage inductif est la région de contour de la région de composant et/ou du composant (30).

7. Dispositif (10) de fabrication additive d'au moins une région d'un composant (30), en particulier d'un composant d'une turbomachine, comprenant :
- au moins une alimentation en poudre (18) destinée à l'application d'au moins une couche de poudre (28) d'un matériau métallique (22) sur une zone de construction et de jonction d'une plate-forme de construction (12) ;
- au moins une source de rayonnement (14) destinée à générer au moins un faisceau à haute énergie (16), au moyen duquel l'au moins une couche de poudre (28) dans la région de la zone de construction et de jonction peut être fondue et/ou frittée localement pour former au moins une région partielle d'une couche de composant ;
- au moins un dispositif d'induction (32) ; et
- un dispositif de commande et de réglage configuré pour commander et régler le dispositif d'induction (32) pour former au moins une autre région partielle de la couche de composant par fusion et/ou frittage local du matériau (22) de la couche de poudre (28) au moyen d'un chauffage inductif à une température ou dans une plage de température qui est supérieure à la température de solidus du matériau métallique (22) utilisé.

8. Dispositif selon la revendication 7,
**caractérisé**
**en ce que** le dispositif d'induction (32) comprend au moins une bobine d'induction (42, 44).

9. Dispositif selon la revendication 8,
**caractérisé**
**en ce qu'**au moins deux bobines d'induction (42, 44) forment une région de croisement.

10. Dispositif selon la revendication 8 ou 9,
**caractérisé**
**en ce qu'**au moins une autre bobine d'induction, qui est disposée de façon mobile ou non mobile, est conçue de telle manière qu'elle provoque, au moyen du chauffage inductif, une fusion et/ou un frittage d'une région de contour de la région de composant et/ou du composant (30) à l'intérieur de la couche de poudre (28).

11. Dispositif selon l'une quelconque des revendications 7 à 10,
**caractérisé**
**en ce que** le dispositif d'induction (32) est conçu de façon à pouvoir être réglé de manière à ce que différentes températures ou plages de température pouvant être obtenues par chauffage inductif puissent être ajustées et réglées avant, pendant et/ou après la fabrication additive de la région de composant et/ou du composant (30).

12. Dispositif selon l'une quelconque des revendications 7 à 11,
**caractérisé**
**en ce que** le dispositif (10) comprend au moins un dispositif de fusion sélective par laser et/ou au moins un dispositif de fusion par faisceau d'électrons.
